**Europäisches Patentamt**

(19) **European Patent Office**

**Office européen des brevets**

(11) Veröffentlichungsnummer: **0 179 165**
**B1**

(12) # EUROPÄISCHE PATENTSCHRIFT

(45) Veröffentlichungstag der Patentschrift:
**02.09.87**

(51) Int. Cl.⁴: **B 23 K 11/26**

(21) Anmeldenummer: **84112852.3**

(22) Anmeldetag: **25.10.84**

(54) Schweissmaschine zur Durchführung des Kondensatorentladungsschweissens.

(43) Veröffentlichungstag der Anmeldung:
**30.04.86 Patentblatt 86/18**

(45) Bekanntmachung des Hinweises auf die Patenterteilung:
**02.09.87 Patentblatt 87/36**

(84) Benannte Vertragsstaaten:
**AT BE CH FR GB IT LI LU NL SE**

(56) Entgegenhaltungen:
**DE-A-3 315 314**
**GB-A-935 296**

(73) Patentinhaber: **Schäfer Werke GmbH, Postfach 1120, D-5908 Neunkirchen (DE)**

(72) Erfinder: **Stühn, Horst, Zum Baumert 6, D-5241 Weitefeld (DE)**
Erfinder: **David, Horst, Stormweg 2, D-5908 Neunkirchen (DE)**
Erfinder: **Meike, Klaus, Eiserfelder Hütte 22, D-5900 Siegen 31 (DE)**
Erfinder: **Schlemmer, Manfred, Dipl.- Ing., Tulpenweg 5, D-4300 Essen (DE)**
Erfinder: **Kniat, Hans J., Dipl.- Ing., Benninghoferstrasse 260, D-4600 Dortmund 30 (DE)**

(74) Vertreter: **Patentanwälte Dipl.- Ing. R. Schlee Dipl.- Ing. A. Missling, Bismarckstrasse 43, D-6300 Giessen (DE)**

LIBER, STOCKHOLM 1987

## Beschreibung

Die Erfindung bezieht sich auf eine Schweißmaschine zur Durchführung des Kondensatorentladungsschweißens mit mindestens zwei Transformatoren, deren Sekundärspulen einerseits an mindestens eine erste Elektrode (Hauptelektrode) und andererseits an mindestens eine zweite Elektrode (Gegenelektrode) angeschlossen sind.

Das Kondensatorentladungsschweißen ist eine Sonderart der elektrischen Widerstandspreßschweißung und ist gut für die Herstellung von Punktschweißungen geeignet. Bei der klassischen elektrischen Widerstandspreßschweißung fließt ein starker elektrischer Strom während einer verhältnismäßig langen Zeitdauer, die auch von der Dicke der zu verschweißenden Bleche abhängt. Beispielsweise ist die Dauer des Stromflusses bei der Punktverschweißung von zwei Schalen aus Blech von 1 mm Dicke eines Plattenheizkörpers 200 msec. Während dieser Schweißzeit wird dem Stromnetz eine große Leistung entnommen, was entsprechend hohe Anschlußwerte voraussetzt. Der Anschlußwert nämlich muß so groß sein, wie wenn die während der Schweißung nötige Leistung dauernd entnommen würde. Ein Nachteil der verhältnismäßig langen Schweißdauer ist auch die starke Erwärmung des Werkstückes und die Abführung großer Wärmemengen, die nicht zum Anschmelzen des Werkstoffes genutzt werden. Schweißungen können dort überhaupt nicht ausgeführt werden, wo die Querschnitte und/oder das Material so beschaffen sind, daß die Wärmeableitung so groß ist, daß die Schmelztemperatur überhaupt nicht erreicht wird.

Beim Kondensatorentladungsschweißen ist die Schweißdauer sehr viel kürzer. Sie liegt meist im Bereich von 1,2 bis 10 msec. Dies ist möglich, weil während der kurzen Schweißzeit ein Strom durch das Werkstück geschickt wird, der wesentlich höher ist als beim konventionellen elektrischen Widerstandspreßschweißen. Die hohe Leistung wird bei der Entladung eines Kondensators freigesetzt, der zuvor während einer Zeit aufgeladen wurde, die ein Vielfaches der Schweißzeit ist. Der Kondensatorstrom wird in mindestens einem Transformator in einen starken Strom von niedriger Spannung umgewandelt. Während der kurzen Schweißzeit kann nur wenig Energie durch Wärmeleitung verloren gehen, wodurch ein Verziehen oder Ausglühen des Werkstückes vermieden wird. Es kann auch in unmittelbarer Nähe wärmeempfindlicher Teile geschweißt werden. Es ist möglich, Metalle mit hoher elektrischer und thermischer Leitfähigkeit zu schweißen. Auch können Werkstücke unterschiedlicher Querschnitte und Werkstoffe geschweißt werden. Eine Elektrodenkühlung ist nicht erforderlich. Ein wesentlicher Vorteil ist auch der geringe Netzanschlußwert, da nur so große Anschlußwerte nötig sind, daß die verhältnismäßig kleine Leistung während des Aufladens des Kondensators aufgebracht werden muß.

Das Kondensatorentladungsschweißen wurde bisher für die Herstellung relativ kleiner Werkstücke eingesetzt. Für die Herstellung von so großen Werkstücken, wie Plattenheizkörpern, ist das Kondensatorentladungsschweißen bisher nicht angewendet worden. Bei der Herstellung solcher Werkstücke besteht das Problem, lange Elektroden mit einer Reihe von Erhebungen oder eine größere Zahl von in einer Reihe angeordneten einzelnen Elektroden mit dem sehr starken Strom gleichmäßig zu versorgen, so daß alle Schweißungen einer Reihe möglichst gleichmäßig ausfallen. Der Erfindung liegt demgemäß die Aufgabe zugrunde, eine Schweißmaschine der eingangs genannten Art so auszubilden, daß lange stabförmige Elektroden oder Reihen von Einzelelektroden über ihre gesamte Länge möglichst gleichmäßig mit Schweißstrom versorgt werden können.

Diese Aufgabe wird nach der Erfindung dadurch gelöst, daß beiderseits eines Durchlasses (Werkstückdurchlaß) für zu schweißende Werkstücke einander gegenüberliegend je ein Transformator oder mehrere parallelgeschaltete Transformatoren angeordnet ist bzw. sind, wobei die beiderseits des Werkstückes befindlichen Transformatoren über einen den Werkstückdurchlaß umgebenden, als geschlossener Rahmen ausgebildeten Leiter und die von den Elektroden gebildete Schweißzone hintereinandergeschaltet sind.

Bei einer so ausgebildeten Schweißmaschine sind die Transformatoren beiderseits des Werkstückes angeordnet. Durch die Hintereinanderschaltung der Transformatoren über einen den Werkstückdurchlaß umgreifenden Leiter kann die Leistung beider Transformatoren auf kurzem Weg auf die Schweißstelle übertragen werden. Es ist dadurch möglich, eine Reihe von Schweißungen gleichzeitig auszuführen, wobei die mehreren Schweißstellen gleichmäßig mit Schweißstrom versorgt werden.

Beiderseits des Werkstückdurchlasses können gemäß Anspruch 2 mehrere Transformatoren angeordnet sein, wodurch besonders starke Ströme erreichbar sind. Bei der Abstimmung der Rahmenbreite auf die Bandbreite der Sekundärspulen werden Querschnittsengpässe und damit Ungleichmäßigkeiten in der Weiterleitung des Schweißstromes vermieden. Besonders vorteilhaft ist die Anordnung von drei Transformatorenpaaren, wie sie im Anspruch 3 beschrieben ist. Durch die im Anspruch 3 beschriebene Orientierung der Transformatoren erreicht man bei insgesamt kompakter Anordnung der Transformatoren, daß auch der Strom aus den mittleren Transformatoren gut verteilt wird. Hierzu trägt weiterhin auch die Maßnahme des Anspruches 4 bei.

Bei einer Anordnung von mehreren Transformatoren ist eine Gruppe von einerseits des Werkstückes angeordneten Transformatoren mit einer Gruppe von auf der anderen Seite des Werkstückes angeordneten Transformatoren in Reihe geschaltet, d. h. die einerseits des Werkstückes liegenden Transformatoren sind parallelgeschaltet.

Besonders zweckmäßig sind horizontale Anordnungen der Transformatorenreihen (Anspruch 5). Es kann aber auch zweckmäßig sein, die Transformatoren in vertikalen oder schräg im Raume liegenden Reihen anzuordnen. Speziell für die Fertigung von Plattenheizkörpern ist die horizontale Anordnung vorteilhaft.

Sammelschienen gemäß Anspruch 6 bringen den Vorteil, daß der Strom aus drei Transfotmatoren sehr gleichmäßig auf eine Reihe von Elektroden oder auf eine lange stabförmige Elektrode übertragen werden kann. Vorteilhafterweise werden die Übergänge der Anschlußbalken in den Hauptkörper der Stromschiene so gestaltet, daß Querschnittsverengungen vermieden werden. Zu diesem Zwecke können Abschrägungen vorgesehen werden, die von den Fußpunkten der Anschlußbalken zu den Enden der Schiene hin verlaufen.

Für eine Serienfertigung ist von Vorteil, wenn gemäß Anspruch 7 innerhalb des Werkstückdurchlasses eine Transportbahn angeordnet ist. Insbesondere für die Herstellung von Heizkörpern ist ein Rollenförderer vorteilhaft, der den Heizkörper schrittweise vorschiebt, entsprechend dem gewünschten Abstand der Schweißstellen.

Vorteilhaft ist eine Elektrodenanordnung gemäß Anspruch 8. Die individuell bewegbaren Hauptelektroden können sich in einem gewissen Toleranzbereich ungleichmäßig abnutzen, wobei trotzdem ein gleichmäßiger Andruck beim Schweißen erhalten bleibt. Mehrere Schweißpunkte können aber auch mittels einer balkenförmigen Elektrode hergestellt werden, die eine Reihe von Vorsprüngen hat. Den individuell beweglichen Hauptelektroden kann als Gegenelektrode ein Balken gegenüberliegen.

In den Ansprüchen 9 bis 13 ist eine Ausbildung einer stabförmigen Gegenelektrode derart angegeben, daß dieser Elektrodenbalken mehrmals verstellt werden kann, um immer wieder unbenutzte Stellen an den Ort zu bringen, wo der Andruck der Hauptelektroden wirksam ist. Man kann deshalb einen solchen Elektrodenbalken lange Zeit benutzen, bevor ein Nachschleifen nötig ist. Bei Kombination aller Maßnahmen nach den Ansprüchen 9 bis 12 können z. B. vierzig Verstellungen vorgenommen werden, wenn eine Längsverschiebung in fünf verschiedene Stellungen möglich ist. Um eine Verstellung rasch vornehmen zu können, kann eine Spanneinrichtung gemäß Anspruch 13 vorgesehen werden.

Im Anspruch 14 sind Angaben über die Größe angegeben, mit der erfindungsgemäße Maschinen gebaut werden können. Es handelt sich um wesentlich größere Abmessungen und Leistungen, als sie bisher bei Maschinen für das Kondensatorentladungsschweißen angewendet wurden.

Die Verwendung von Pneumatikzylindern als Bewegungseinrichtung für bewegliche Elektroden (Ansprüche 15 und 16) hat den Vorteil, daß mit relativ geringem Aufwand ein schnelles Nachsetzen der Elektroden während des Schweißvorganges möglich ist. Innerhalb der sehr kurzen Schweißzeit von wenigen Millisekunden müssen die Elektroden um 0,6 bis 0,8 mm nachgesetzt werden. Bisher wurden für diesen Zweck in Hydraulikzylinder besondere Tellerfederpakete eingesetzt, da das Hydrauliksystem für sich die schnelle Bewegung nicht ausführen kann. Der Einbau besonderer Tellerfederpakete ist baulich aufwendig und erfordert auch einen größeren Platzbedarf. Bei enger Anordnung der Elektroden kann die nötige Kraft auch mit Pneumatikzylindern erreicht werden, wenn jeder Elektrode mehrere Pneumatikzylinder zugeordnet werden, die entsprechend Anspruch 16 angeordnet sind.

Zur weiteren Leistungserhöhung der Schweißmaschine können Teile des Rahmens durch Sekundärwindungen von weiteren Transformatoren gebildet werden (Ansprüche 17 bis 19). Auch bei dieser Anordnung erhält man für alle Elektroden, die einerseits des Werkstückes angeordnet sind, die gleiche Polarität.

In der Zeichnung ist ein Ausführungsbeispiel der Erfindung dargestellt. Es zeigen:

Fig. 1 eine vereinfachte perspektivische Darstellung der Hauptbestandteile einer Schweißmaschine für das Kondensatorentladungsschweißen, wobei die Tragkonstruktion der Übersichtlichkeit wegen weggelassen ist,

Fig. 2 einen vertikalen Schnitt durch die Schweißmaschine nach Fig. 1, wobei in Fig. 2 auch die Tragkonstruktion angedeutet ist,

Fig. 3 eine schematische perspektivische Darstellung der Schweißmaschine, wobei außer einer Transporteinrichtung für die Werkstücke die gleichen Bestandteile wie in Fig. 1 dargestellt sind,

Fig. 4 eine Draufsicht auf einen Teil der Schweißmaschine in Richtung des Pfeiles IV in Fig. 2, wobei jedoch die Tragkonstruktion weggelassen ist,

Fig. 5 eine der Fig. 1 entsprechende Darstellung bei einer Ausführungsform mit zusätzlichen Transformatoren und

Fig. 6 eine der Fig. 3 entsprechende Darstellung der Ausführungsform mit zusätzlichen Transformatoren.

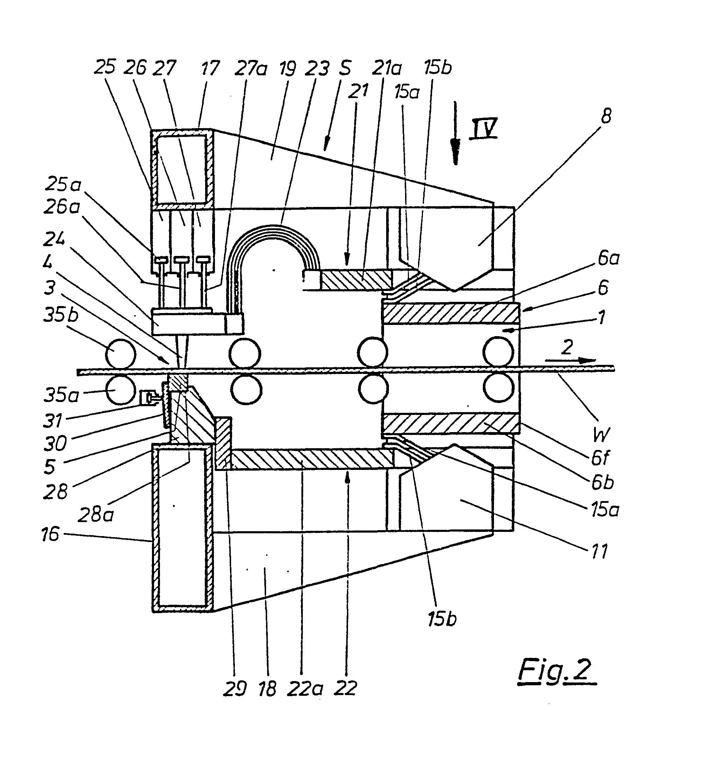

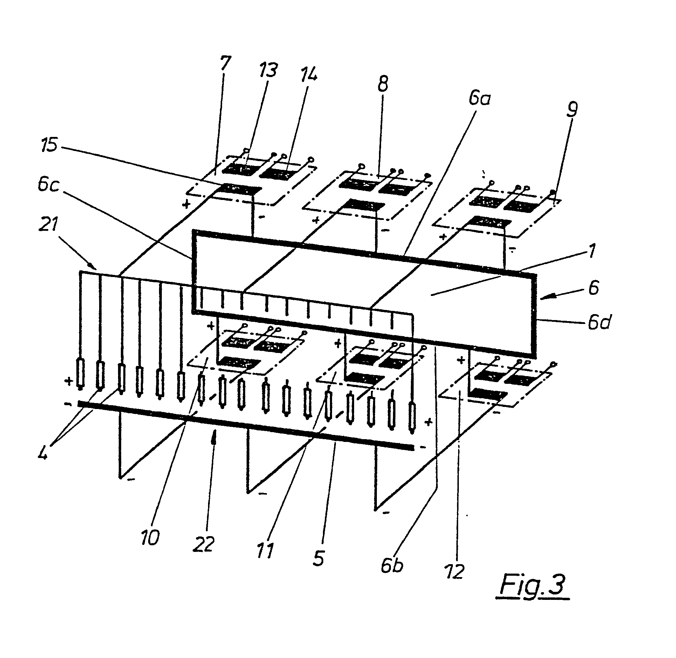

Die insgesamt mit S bezeichnete Schweißmaschine hat einen Werkstückdurchlaß 1 für ein Werkstück. Die dargestellte Maschine ist speziell für die Schweißung von Plattenheizkörpern bestimmt. Das Werkstück W ist also ein Plattenheizkörper, der in Richtung des Pfeiles 2 schrittweise weiterbewegt wird. Die Schweißzone der Schweißmaschine S ist insgesamt mit 3 bezeichnet. In der Schweißzone befinden sich viele Hauptelektroden 4, die in einer (in Fig. 2 gesehen) quer zur Zeichenebene verlaufenden Reihe angeordnet sind. Die Hauptelektroden 4 werden von oben an das Werkstück W angedrückt. Unterhalb des Werkstückes W befindet sich eine balkenförmige Gegenelektrode 5, deren Länge so groß ist, daß an ihr sämtliche Hauptelektroden 4 ein Widerlager finden können.

Der Werkstückdurchlaß 1 ist von einem Rahmen 6 umgeben, der vier Wände hat, nämlich eine obere Wand 6a, eine untere Wand 6b und Seitenwände 6c und 6d. Die Wände haben einen großen Querschnitt mit einer Breite b und bestehen aus Kupfer, da der Rahmen 1 als Leiter für sehr starke Schweißströme dient.

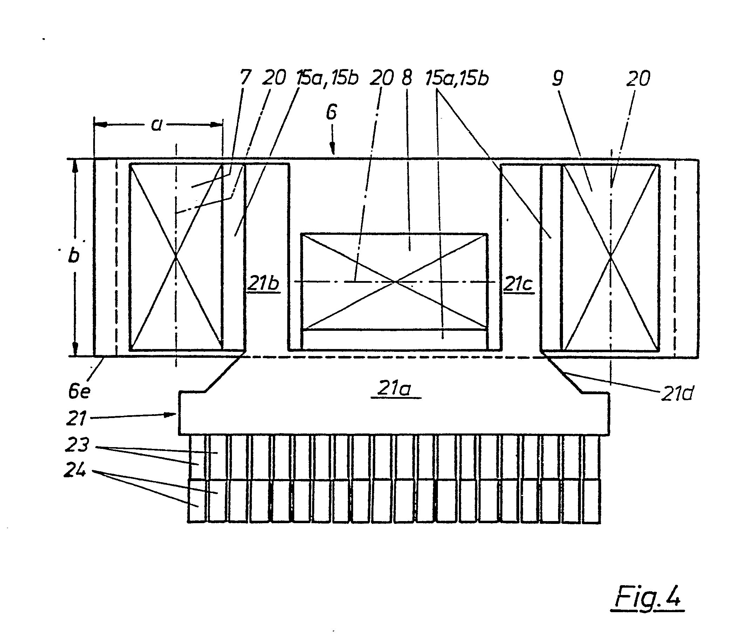

Oberhalb des Rahmens 6 sind drei Transformatoren 7, 8, 9 und unterhalb der Rahmenwand 6b drei weitere Transformatoren 10, 11 und 12 angeordnet (siehe dazu auch Fig. 3). Jeder der Transformatoren 7 bis 12 hat zwei Primärspulen 13, 14 und eine Sekundärspule 15. Die Primärspulen 13, 14 können wahlweise hintereinander oder parallelgeschaltet werden und bestehen jeweils aus einer größeren Anzahl von Windungen. Die Sekundärwicklung 15 besteht aus nur einer einzigen Windung, die durch ein Band gebildet ist, das sich über die gesamte Breite des Transformators erstreckt. Die Enden dieser einzigen Windung sind aus dem Transformator herausgeführt; sie sind mit 15a und 15b bezeichnet. Die Transformatoren sind an einem Maschinengestell aufgehängt, das nur in Fig. 2 teilweise dargestellt ist. Von dem Maschinengestell sind in Fig. 2 eine untere Traverse 16 und eine obere Traverse 17 sowie an diesen Traversen befestigte Träger 18 und 19 dargestellt. Die Transformatoren sind an den Trägern 18 und 19 befestigt.

Die Orientierung der Transformatoren relativ zum Rahmen 6 ist am besten aus Fig. 4 zu erkennen. Die äußeren Transformatoren 7 und 9 liegen quer zu der Rahmenebene. Unter der Rahmenebene soll eine vertikale Ebene verstanden werden, die parallel zu den langen Seiten 6a und 6b des Rahmens verläuft. Die Lage quer zur Rahmenebene bedeutet, daß die Achsen 20 der Sekundärspulen rechtwinklig zur Rahmenebene verlaufen. Die Spulenenden 15a, 15b weisen nach innen, haben also einen gewissen Abstand a von den seitlichen Enden des Rahmens. Der mittlere Transformator 8 steht rechtwinklig zu den Transformatoren 7 und 9, d.h. die Achse 20 seiner Sekundärspule verläuft parallel zur Rahmenebene. Die Spulenenden 15a, 15b sind in der Nähe der Vorderfläche 6e des Rahmens 6 befestigt. Die unterhalb des Rahmens 6 angeordneten Transformatoren 10, 11 und 12 sind gleich angeordnet, also ebenfalls derart, daß die äußeren Transformatoren 10 und 12 mit den Achsen ihrer Sekundärspulen quer zur Rahmenebene und der mittlere Transformator 11 mit seiner Spulenachse parallel zur Rahmenebene verläuft. Auch an der Unterseite des Rahmens weisen die Enden 15a, 15b der Sekundärspulen der äußeren Transformatoren 10, 12 nach innen, während die Spulenenden 15a, 15b des mittleren Transformators 11 der Vorderfläche 6e des Rahmens 6 benachbart sind.

Oberhalb des Rahmens 6 ist eine Sammelschiene 21 angeordnet. Die Sammelschiene 21 besteht aus einer dicken Kupferplatte, da auch die Sammelschiene den sehr starken Schweißstrom leiten muß. Die Sammelschiene 21 hat einen Basisteil 21a und rechtwinklig vom Basisteil 21a abragende Anschlußbalken 21b und 21c. An die Fußpunkte der Anschlußbalken 21b, 21c schließen nach außen hin schräge Übergange 21d unter einem Winkel von 45° an. Dadurch wird der Basisteil 21a nach außen hin verjüngt. Die Verjüngung ist etwa proportional zur Stromdichte. Der Anschlußbalken 21b ragt in den Zwischenraum zwischen den Transformatoren 7 und 8, und der Anschlußbalken 21c in den Zwischenraum zwischen den Transformatoren 8 und 9. Die Windungsenden 15a der Sekundärspulen der Transformatoren 7 und 8 sind über ihre gesamte Breite elektrisch leitend mit den Anschlußbalken 21b, 21c verbunden. Zu diesem Zwecke liegen diese Windungsendungen an der Unterseite der Anschlußbalken an. Das Windungsende 15a des Transformators 8 liegt an der Unterseite des Basisteiles 21a der Sammelschiene 21 an und ist mit dieser Unterseite elektrisch leitend verbunden, wie dies aus Fig. 2 ersichtlich ist.

Unterhalb des Rahmens 6 ist eine weitere Sammelschiene angeordnet, die ebenfalls Anschlußbalken aufweist, die in gleicher Weise zwischen die unteren Transformatoren 10/11 bzw. 11/12 eingreifen. Die unteren Transformatoren sind in gleicher Weise mit der Sammelschiene 22 verbunden, wie die oberen Transformatoren. Der Basisteil 22a der Sammelschiene 22 hat eine größere Breite als der Basisteil 21a der Sammelschiene 21, da mit diesem Basisteil Strom bis in den Bereich der Schweißzone 3 geleitet werden soll, während oberhalb des Werkstückes W für die weitere Überleitung des Schweißstromes flexible Leiter 23 dienen.

Jede Hauptelektrode 4 ist an einen Elektrodenträger 24 befestigt. Jedem Elektrodenträger 24 sind drei Pneumatikzylinder 25, 26, 27 zugeordnet, in denen Kolben 25a, 26a, 27a gleitbar sind, die mit Kolbenstangen verbunden sind, die ihrerseits mit dem Elektrodenträger 24 verbunden sind. Durch Druckbeaufschlagung der Pneumatikzylinder 25, 26, 27 können die Elektrodenträger gehoben und gesenkt werden. Mit den Pneumatikzylindern kann auch eine definierter Andruck der zugeordneten Elektrode 4 an das Werkstück W bewirkt werden. Pneumatikzylinder haben den Vorteil, daß die Elektroden während des Schweißvorganges rasch nachgesetzt werden. Dies ist im Hinblick auf den sehr rasch ablaufenden Schweißvorgang ein wesentlicher Vorteil.

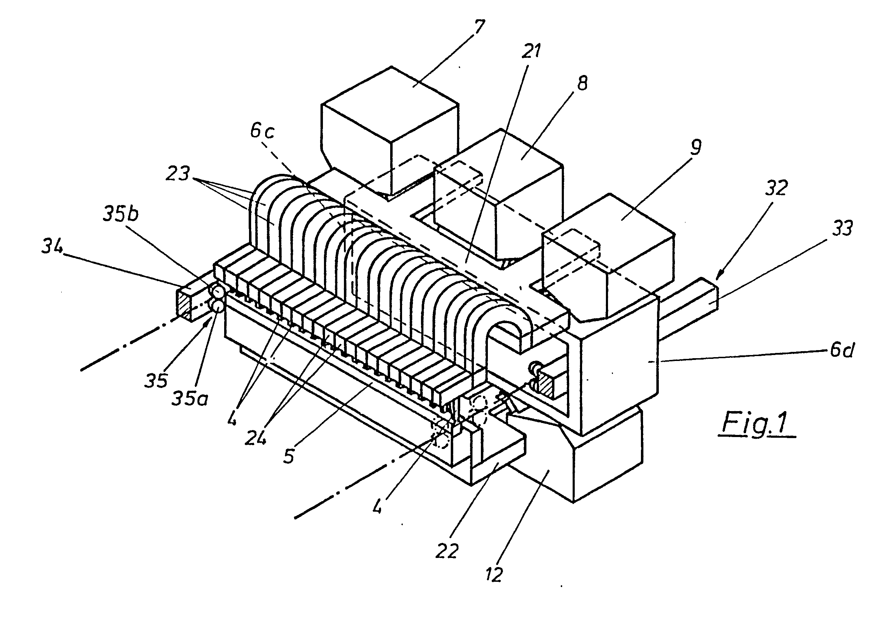

Die Stromzufuhr zu jeder Hauptelektrode 4 erfolgt über einen flexiblen Leiter 23, der aus mehreren parallelen Kupferbändern besteht. Wie aus Fig. 1 ersichtlich, hat die dargestellte Maschine insgesamt einundzwanzig Hauptelektroden 4. Jeder Hauptelektrode 4 ist ein flexibler Leiter 23 zugeordnet.

Die Gegenelektrode 5 ist balkenförmig ausgebildet und hat einen quadratischen Querschnitt. Sie liegt auf einem Lagerbock 28 auf, der über ein Zwischenstück 29 elektrisch leitend mit der Sammelschiene 22 verbunden ist. Am oberen Ende des Lagerbockes befindet sich eine Ausnehmung 28a, in der die Gegenelektrode 5 fixiert wird. Zum Festhalten der Gegenelektrode dient eine Spannleiste 30, die an der Vorderseite des Lagerbockes 25 angeordnet und mittels pneumatischen Spannzylindern 31 gegen die Elektrode 5 anpreßbar ist, wodurch diese auf dem Lagerbock 28 festgedrückt wird.

Im Werkstückdurchlaß 1, der sich von der Rückseite 6f des Rahmens 6 bis zur Schweißzone 3 hin erstreckt, ist ein Rollenförderer 32 angeordnet. Der Rollenförderer besteht aus zwei Tragbalken 33 und 34, an denen Rollenpaare 35 aus Rollen 35a und 35b gelagert sind. Das Werkstück W, also im vorliegenden Fall ein Plattenheizkörper, wird an seinen Randflanschen zwischen den Rollen 35a und 35b der Rollenpaare 35 erfaßt und kann mit Hilfe der Rollen schrittweise in Richtung des Pfeiles 2 weiterbewegt werden.

Die Schweißmaschine arbeitet wie folgt. In einer Pause zwischen zwei Schweißvorgängen werden in der Zeichnung nicht dargestellte Kondensatoren aufgeladen. Beim Vorschieben des Werkstückes W in eine neue Schweißposition sind die Hauptelelektroden 4 angehoben; die Anhebung wird durch Beaufschlagung der Kolben 25a, 26a, 27a von unten bewirkt. In der neuen Schweißstellung wird das Werkstück W mit nicht dargestellten Mitteln fixiert. Danach werden die Kolben 25a, 26a, 27a von oben beaufschlagt und sämtliche Hauptelektroden 4 legen sich an das Werkstück W an und pressen dieses an die Gegenelektrode 5. Wenn der nötige Preßdruck erreicht ist, wird automatisch die Entleerung der Kondensatoren in Gang gesetzt. Der Entladungsstrom wird durch die Primärspulen 13, 14 der Transformatoren 7 bis 12 geleitet. Dadurch wird in den Sekundärspulen 15 der Transformatoren ein sehr starker Strom induziert, der die Hauptelektroden 4, das Werkstück W und die Gegenelektrode 5 durchläuft.

Wie man am besten aus der schematischen Darstellung nach Fig. 3 ersehen können, sind die oberen Transformatoren 7, 8, 9 parallelgeschaltet. Ebenfalls parallelgeschaltet sind die Transformatoren 10, 11, 12. Die Gruppen 7/8/9 und 10/11/12 sind hintereinandergeschaltet. Dies ist auch verdeutlicht durch die Angabe der Polaritäten durch Plus- bzw. Minuszeichen. Beim Durchgang des Stromes durch das Werkstück W finden Punktschweißungen statt. Die Vorteile der Kondensatorentladungsschweißung sind schon in der Beschreibungseinleitung genannt. Im Zusammenhang mit der Herstellung von Heizkörpern kann z. B. der Vorteil gewonnen werden, daß an den Schweißstellen Markierungen nicht entstehen, so daß ein Überschleifen von Sichtflächen nicht nötig ist.

Die Einzelbeweglichkeit der Hauptelektroden 4 hat den Vorteil, daß auch bei unterschiedlicher Abnutzung der Elektroden an jeder Schweißstelle ein definierter Elektrodenandruck gewährleistet ist.

Wie Fig. 2 zeigt, sind die Hauptelektroden 4 gegenüber der Mitte der Gegenelektrode 5 etwas nach rechts versetzt. Die Gegenelektrode 5 kann auch in ihrer Längsrichtung verschoben werden, wobei z. B. fünf verschiedene Stellungen möglich sind, wobei bei jeder Stellung andere Bereiche der Elektrodenoberfläche unterhalb der Hauptelektroden 4 liegen. Der Elektrodenstab 5 kann auch um seine Längsachse gedreht werden, so daß nach einer Drehung eine bisher nicht benutzte Fläche oben liegt und als Kontaktfläche benutzt wird. Der Elektrodenstab kann auch um eine senkrechte Achse um 180° gedreht werden, wobei dann der Bereich andererseits der Längsmittellinie den Elektroden 4 gegenüberliegt. Die beschriebenen Verstellmöglichkeiten (Längsverschiebung, Drehung um Längsachse, Drehung um senkrechte Achse) ermöglicht insgesamt vierzig verschiedene Einstellungen, so daß eine lange Benutzung der Gegenelektrode möglich ist, bevor die Kontaktflächen nachgeschliffen werden müssen. Um die Verstellungen möglichst bequem durchführen zu können, ist die beschriebene pneumatische Spannung mittels der Spannzylinder 31 vorgesehen.

Mit der Schweißmaschine können beliebig lange Werkstücke geschweißt werden, da die Werkstücke die Schweißmaschine durchlaufen. Die Werkstücke können eine verhältnismäßig große Breite haben. Die gleichmäßige Verteilung des hohen Schweißstromes wird durch die besondere Anordnung der Transformatoren oberhalb und unterhalb des Werkstückdurchlasses 1 erreicht.

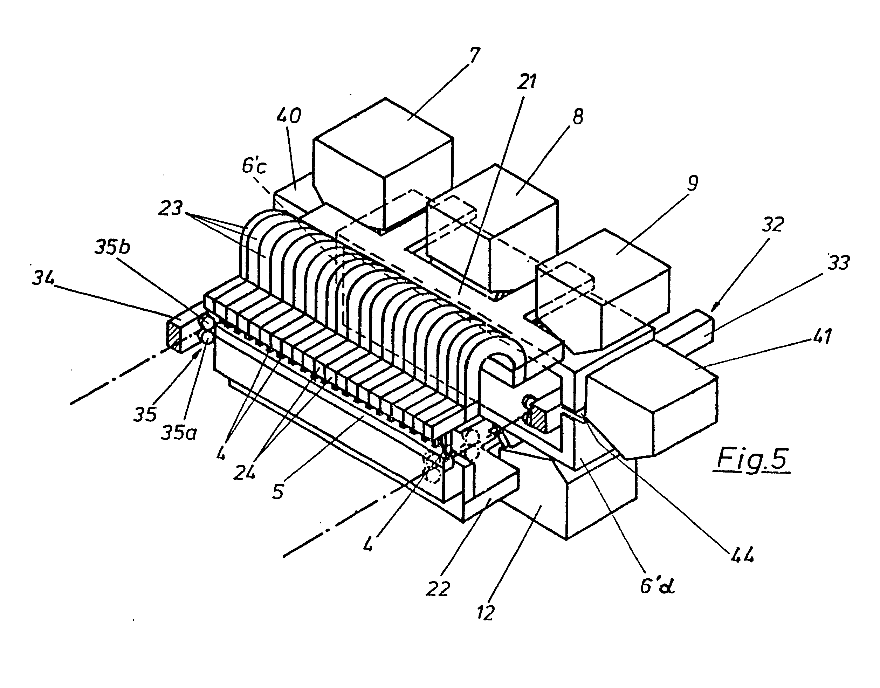

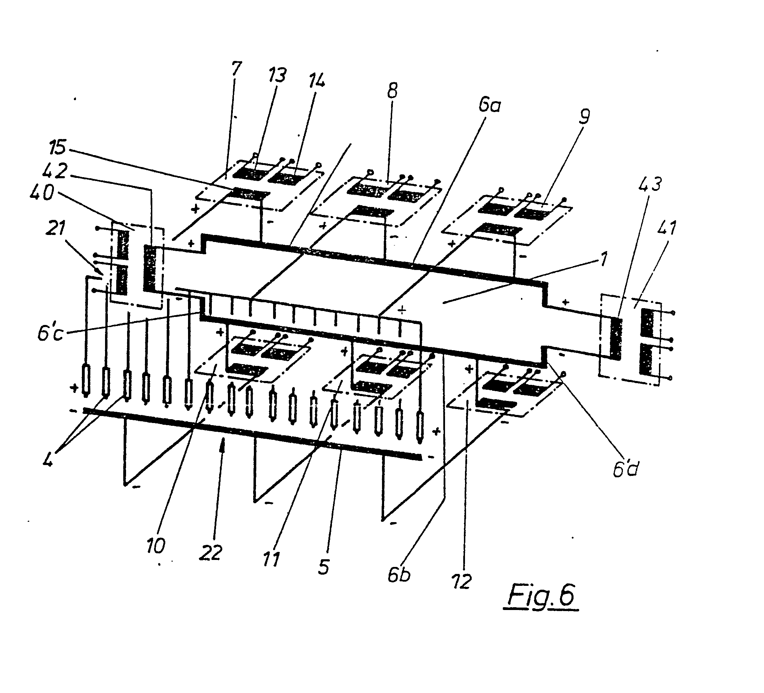

Bei der Ausführungsform nach den Fig. 5 und 6 sind zusätzliche Transformatoren 40 und 41 vorgesehen. Wie am besten aus der schematischen Zeichnung nach Fig. 6 erkennbar, bilden die Sekundärwindungen 42, 43 der Transformatoren 40, 41 Bestandteile des hier mit 6' bezeichneten Rahmens, nämlich der kurzen Rahmenseiten 6'c und 6'd. Auch bei den Transformatoren 40, 41 bestehen die Sekundärspulen 42, 43 jeweils aus einer einzigen Windung, die aus einem breiten Blechband hergestellt ist. Die Breite des Blechbandes ist gleich der Rahmenbreite. Dies ist in Fig. 5 sichtbar, in der das Band, aus dem die Sekundärwindung 43 hergestellt ist, mit 44 bezeichnet ist.

Die Schaltung ist so, daß die Gruppe aus den Transformatoren 7, 8, 9, die Gruppe aus den Transformatoren 40, 41 und die Gruppe aus den Transformatoren 10, 11, 12 in Reihe geschaltet sind. Die Spannung zwischen den Elektroden 4, 5 ist gegenüber der Ausführungsform nach den Fig. 1 bis 4 also höher, nämlich um die Spannung der parallel geschalteten Transformatoren 40, 41. Dies gilt unter der Voraussetzung, daß bei der Ausführungsform nach den Fig. 5 und 6 Transformatoren 7, 8, 9 und 10, 11, 12 mit gleichen Spannungen verwendet werden wie bei der Ausführungsform nach den Fig. 1 bis 4.

**Patentansprüche**

1. Schweißmaschine zur Durchführung des Kondensatorentladungsschweißens mit mindestens zwei Transformatoren, deren Sekundärspulen einerseits an mindestens eine erste Elektrode (Hauptelektrode) (4) und anderers its an mindestens eine zweite Elektrode (Gegenelektrode) (5) angeschlossen sind, dadurch gekennzeichnet, daß beiderseits eines Durchlasses (1) (Werkstückdurchlaß) für zu schweißende Werkstücke (W) einander gegenüberliegend je ein Transformator oder mehrere parallelgeschaltete Transformatoren (7, 8, 9 bzw. 10, 11, 12) angeordnet ist bzw. sind, wobei die beiderseits des Werkstückes (W) befindlichen Transformatoren (7, 8, 9 bzw. 10, 11, 12) über einen den Werkstückdurchlaß (1) umgebenden, als geschlossener Rahmen ausgebildeten Leiter (6) und die von den Elektroden (4, 5) gebildete Schweißzone hintereinandergeschaltet sind.

2. Schweißmaschine nach Anspruch 1, dadurch gekennzeichnet, daß mindestens einige Transformatoren (7, 9, 10, 12) so orientiert sind, daß die Achsen (20) ihrer Sekundärspulen (15) quer zur Rahmenebene verlaufen und daß die Rahmenbreite (b) gleich oder etwas größer ist als die Breite der die Sekundärspulen (5) bildenden Bänder, die mit einem Ende (15b) über ihre gesamte Breite elektrisch leitend mit dem Rahmen (6) verbunden sind.

3. Schweißmaschine nach Anspruch 2, gekennzeichnet durch zwei Gruppen aus je drei parallelgeschalteten Transformatoren (7, 8, 9 bzw. 10, 11, 12), die längs des Rahmens (6) angeordnet sind, wobei die äußeren Transformatoren (7, 9 bzw. 10, 12) gemäß Anspruch 2 zur Rahmenebene angeordnet sind, während die Achsen (20) der Sekundärspulen (15) der mittleren Transformatoren (8, 11) parallel zur Rahmenebene verlaufen und die ebenfalls aus Bändern bestehenden Sekundärspulen (15) mit einem Ende (15b) über ihre gesamte Breite elektrisch leitend mit dem Rahmen (6) verbunden sind.

4. Schweißmaschine nach Anspruch 3, dadurch gekennzeichnet, daß die Anschlußstellen der äußeren Transformatoren (7, 9 bzw. 10, 12) einen Abstand (a) von den Enden der zugeordneten Rahmenseiten (6a, 6b) haben und daß diese Anschlußstellen nahe bei den Anschlußstellen der mittleren Transformatoren (8, 11) liegen.

5. Schweißmaschine nach einem der vorhergehenden Ansprüche, dadurch gekennzeichnet, daß die Transformatoren (7, 8, 9 bzw. 10, 11, 12) in zwei horizontalen Reihen unterhalb und oberhalb des Werkstückdurchlasses (1) angeordnet sind.

6. Schweißmaschine nach einem der Ansprüche 3 bis 5, gekennzeichnet durch Sammelschienen (21, 22), die parallel zu den Rahmenseiten (6a bzw. 6b) verlaufen, längs denen die Transformatoren (7, 8, 9 bzw. 10, 11, 12) angeordnet sind, wobei jede Sammelschiene (21, 22) rechtwinklig von ihr abragende Anschlußbalken (21b, 21c) aufweist, von denen jeder zwischen einen äußeren (7, 9 bzw. 10, 12) und den benachbarten mittleren Transformator (8 bzw. 11) eingreift, wobei die äußeren Transformatoren (7, 9 bzw. 10,12) mit einem Ende (15a) ihrer bandförmigen Sekundärspulen (15) über die gesamte Bandbreite mit dem zugeordneten Anschlußbalken (21b, 21c) verbunden sind, während die bandförmige Sekundärspule (15) jedes mittleren Transformators (8 bzw. 11) mit einem Ende (15b) über die gesamte Bandbreite im Bereich zwischen den Anschlußbalken (21b, 21c) mit dem Basisteil (21a bzw. 22a) der zugeordneten Sammelschiene (21 bzw. 22) verbunden ist.

7. Schweißmaschine nach einem der vorhergehenden Ansprüche, dadurch gekennzeichnet, daß der Werkstückdurchlaß (1) eine Werkstück-Transportbahn (32) umgreift, z. B. einen Rollenförderer mit schrittweise bewegbaren Rollen (35a, 35b), zwischen denen das Werkstück (W), z. B. ein Flachheizkörper, an seinen Rändern festklemmbar und schrittweise weiterbewegbar ist.

8. Schweißmaschine nach einem der Ansprüche 6 und 7, gekennzeichnet durch mehrere Hauptelektroden (4), die in einer Reihe angeordnet sind, wobei jede Hauptelektrode (4) über einen flexiblen Leiter (23) mit der zugeordneten Sammelschiene (21) verbunden ist und eine eigene Antriebseinrichtung (25, 26, 27) aufweist.

9. Schweißmaschine nach Anspruch 8, dadurch gekennzeichnet, daß die Reihe aus Hauptelektroden (4) einer als Elektrodenbalken ausgebildete einzigen Gegenelektrode (5) gegenüberliegt, wobei vorzugsweise die Gegenelektrode (5) unter den Hauptelektroden (4) liegt.

10. Schweißmaschine nach Anspruch 9, dadurch gekennzeichnet, daß der Elektrodenbalken (5) längsverschiebbar ist.

11. Schweißmaschine nach einem der Ansprüche 9 und 10, dadurch gekennzeichnet, daß die Hauptelektroden (4) seitlich der Mittellinie der Kontaktfläche des Elektrodenbalkens (5) angeordnet sind und daß der Elektrodenbalken (5) um eine rechtwinklig zu seiner Kontaktfläche verlaufende Achse um 180° drehbar ist.

12. Schweißmaschine nach einem der Ansprüche 9 bis 11, dadurch gekennzeichnet, daß der Elektrodenbalken (5) mehrere Kontaktflächen aufweist, vorzugsweise vier Kontaktflächen an einem Elektrodenbalken von quadratischem Querschnitt und um seine Längsachse drehbar ist.

13. Schweißmaschine nach einem der Ansprüche 9 bis 12, dadurch gekennzeichnet, daß der Elektrodenbalken (5) mit einer Spannleiste (30) festgeklemmt ist, die mit pneumatisch oder hydraulisch beaufschlagten Spannzylindern (31) gegen den Elektrodenbalken (5) anpreßbar ist.

14. Schweißmaschine nach einem der vorhergehenden Ansprüche, dadurch gekennzeichnet, daß der Werkstückdurchlaß eine lichte Weite von mindestens 500 mm aufweist, daß mehrere Hauptelektroden (4) in einer Reihe von mindestens 300 mm Länge angeordnet sind und daß die Arbeit pro Schweißimpuls größer ist als 25.000 Wsec.

15. Schweißmaschine nach einem der vorhergehenden Ansprüche, dadurch gekennzeichnet, daß als Antriebseinrichtung für bewegbare Elektroden (4) Pneumatikzylinder (25, 26, 27) vorgesehen sind.

16. Schweißmaschine nach Anspruch 15, dadurch gekennzeichnet, daß jeder bewegbaren Elektrode (4) mehrere Pneumatikzylinder (25, 26, 27) zugeordnet sind, die in Reihen liegen, die rechtwinklig zu der Reihe aus Elektroden (4) verlaufen.

17. Schweißmaschine nach einem der vorhergehenden Ansprüche, dadurch gekennzeichnet, daß die Rahmenteile (6'c, 6'd), die sich zwischen den Rahmenbereichen (6a, 6b) erstrecken, an die die genannten Transformatoren (7, 8, 9 bzw. 10, 11, 12) angeschlossen sind, als Sekundärspulen (42, 43) weiterer Transformatoren (40, 41) ausgebildet sind.

18. Schweißmaschine nach Anspruch 17, dadurch gekennzeichnet, daß die weiteren Transformatoren (40, 41) mit den anderen Transformatoren (7, 8, 9 bzw. 10, 11, 12) in Reihenschaltung angeordnet sind.

19. Schweißmaschine nach einem der Ansprüche 17 und 18, dadurch gekennzeichnet, daß einander gegenüberliegend je ein weiterer Transformator (40, 41) angeordnet ist, wobei deren Sekundärwindungen (42, 43) Bestandteile kurzer Rahmenseiten (6'c, 6'd) bilden, während die anderen Transformatoren (7, 8, 9 bzw. 10, 11, 12) an langen Rahmenseiten (6a, 6b) angeordnet sind.

**Claims**

1. A welding machine for carrying out condenser discharge welding with at least two transformers, the secondary coils of which are connected on the one hand to at least one first electrode (main electrode) (4) and on the other hand to at least one second electrode (counterelectrode) (5), characterised in that on both sides of an opening (1) (workpiece opening) for workpieces (W) to be welded, in each case one transformer or a plurality of transformers connected in series (7, 8, 9 or 10, 11, 12) is or are disposed so that they are opposite one another, the transformers (7, 8, 9 or 10, 11, 12) on either side of the workpiece (W) being connected in series via a conductor (6), which surrounds the workpiece opening (1) and is formed as a closed frame, and via the welding zone formed by the electrodes (4, 5).

2. A welding machine according to claim 1, characterised in that at least some transformers (7, 9, 10, 11) are oriented in such a way that the axes (20) of their secondary coils (15) run transverse to the plane of the frame and that the width (b) of the frame is equal to or somewhat greater than that of strips forming the secondary coils (5), the strips being connected by their total breadth at one end (15b) to the frame (6) so that they conduct electricity.

3. A welding machine according to claim 2, characterised by two groups of, in each case, three transformers (7, 8, 9 or 10, 11, 12) connected in parallel and disposed along the frame (6), the outer transformers (7, 9 or 10, 12) being arranged with respect to the plane of the frame as defined in claim 2, while the axes (20) of the secondary coils (15) of the middle transformers (8, 11) run parallel to the plane of the frame and the secondary coils (15), which also consist of strips, are connected to the frame (6) by their total breadth so that they conduct electricity.

4. A welding machine according to claim 3, characterised in that the connection points ot the outer transformers (7, 9 or 10, 12) are at a distance (a) from the ends of the associated sides (6a, 6b) of the frame and in that these connection points are close to the connection points of the middle transformers (8, 11).

5. A welding machine according to any one of the previous claims, characterised in that the transformers (7, 8, 9 or 10, 11, 12) are disposed in two horizontal rows below and above the workpiece opening (1).

6. A welding machine according to any one of claims 3 to 5, characterised by collecting bars (21, 22) which run parallel to the sides of the frame along which the transformers (7, 8, 9 or 10, 11, 12) are disposed, each collecting bar (21, 22) having connecting beams (21b, 21c) projecting at right angles from them, each of which engages between an outer (7, 9 or 10, 12) and the neighbouring middle transformer (8 or 11), the outer transformers (7, 9 or 10, 12) being connected at one end (15a) by the whole breadth of its secondary coil (15), which is in the form of a strip, to the associated connection beam (21b, 21c), while the secondary coil (15), which is in the form of a strip, of each middle transformer (8 or 11) is connected at one end by the whole breadth (15b) of the strip in the region between the connection beams (21b, 21c) to the base (21a or 22a) of the associated collecting bar (21 or 22).

7. A welding machine according to any one of the previous claims, characterised in that the workpiece opening (1) embraces a workpiece conveyor (32), e.g. a roller conveyor with rollers (35a, 35b) which is movable gradually and between which the workpiece (W), e.g. a flat heating-element, can be gripped by its edges and gradually be moved further on.

8. A welding machine according to one of claims 6 and 7, characterised by a plurality of main electrodes (4) disposed in a row, each main electrode (4) being connected via a flexible conductor (23) to the associated collecting bar (21) and having its own drive mechanism (25, 26, 27).

9. A welding machine according to claim 8, characterised in that the row of main electrodes (4) is opposite a single counterelectrode (5) which is formed as an electrode bar and preferably lies below the main electrodes (4).

10. A welding machine according to claim 9, characterised in that the electrode bar (5) is movable longitudinally.

11. A welding machine according to the claims 9 and 10, characterised in that the main electrodes (4) are disposed laterally with respect to the centre line of the contact face of the electrode bar (5) and in that the electrode bar (5) is rotatable about 180° about an axis which extends at right angles to its contact surface.

12. A welding machine according to any one of claims 9 to 11, characterised in that the electrode bar (5) has a plurality of contact faces, preferably four contact faces on an electrode bar of square section, and is rotatable about its longitudinal axis.

13. A welding machine according to any one of claims 9 to 12, characterised in that the electrode bar (5) is clamped by a clamping bar (30) which is pressable against the electrode bar (5) by pneumatically or hydraulically actuated clamping cylinders (31).

14. A welding machine according to any one of the previous claims, characterised in that the workpiece opening has a clear breadth of at least 500 am, in that a plurality of main electrodes (4) is disposed in a row of at least 300 mm long and in that the work per welding impulse is greater than 25 000 Wsec.

15. A welding machine according to any one of the previous claims, characterised in that pneumatic cylinders (25, 26, 27) are provided as a drive mechanism for movable electrodes (4).

16. A welding machine according to claim 15, characterised in that each movable electrode (4) has a plurality of pneumatic cylinders (25, 26, 27) which are in rows running at right angles to the row of electrodes (4).

17. A welding machine according to any one of the previous claims, characterised in that the parts of the frame (6'c, 6'd) which extend between the frame regions (6a, 6b) to which the said transformers (7, 8, 9 or 10, 11, 12) are connected, are designed as secondary coils (42, 43) of further transformers (40, 41).

18. A welding machine according to claim 17, characterised in that the further transformers (40, 41) are arranged in series with the other transformers (7, 8, 9 or 10, 11, 12).

19. A welding machine according to one of claims 17 and 18, characterised in that in each case a further transformer (40, 41) is disposed so that they are opposite one another, their secondary windings (42, 43) forming components of the short sides (6'c, 6'd) of the frame, while the other transformers (7, 8, 9 or 10, 11, 12) are disposed on the long sides (6a, 6b) of the frame.

**Revendications**

1. Machine à souder pour l'exécution de soudages par décharge de condensateurs, comprenant au moins deux transformateurs dont les enroulements secondaires sont reliés d'une part à au moins une première électrode (électrode principale) (4) et d'autre part à au moins une deuxième électrode (contre-électrode) (5), caractérisée en ce qu'un transformateur ou plusieurs transformateurs (7, 8, 9 et 10, 11, 12) branchés en parallèle les uns en regard des autres est ou sont respectivement disposés de chaque côté d'un intervalle de passage (1) (passage des pièces à traiter) pour des pièces à souder, les transformateurs (7, 8, 9 et 10, 11, 12) se trouvant des deux côtés de la pièce (W) étant branchés en série les uns après les autres par l'intermédiaire d'un conducteur (6) entourant le passage (1) des pièces à traiter et constitué d'un cadre fermé, et de la zone de soudage constituée par les électrodes (4, 5).

2. Machine à souder selon la revendication 1, caractérisée en ce qu'au moins certains transformateurs (7, 9, 10, 12) sont orientés de façon que les axes (20) de leurs enroulements secondaires (15) soient dirigés transversalement par rapport au plan du cadre et que la largeur du cadre (b) soit égale ou un peu supérieure à la largeur des bandes formant les enroulements secondaires (15) qui sont reliés par une de leurs extrémités (15b) au cadre (6), de façon électriquement conductrice, et sur toute leur largeur.

3. Machine à souder selon la revendication 2, caractérisée en ce qu'elle comprend deux groupes formés chacun par trois transformateurs branchés en parallèle (7, 8, 9 et 10, 11, 12), qui sont disposés le long du cadre (6), les transformateurs extérieurs (7, 9 et 10, 12) selon la revendication 2 étant disposés vers le plan du cadre, tandis que les axes (20) des enroulements secondaires (15) des transformateurs médians (8, 11) sont dirigés parallèlement au plan du cadre, et ces enroulements secondaires (15), constitués également par des bandes, sont reliés par une de leurs extrémités (15b) au cadre (6), de façon électriquement conductrice et sur toute leur largeur.

4. Machine à souder selon la revendication 3, caractérisée en ce que les emplacements de

8

raccordement des transformateurs extérieurs (7, 9 et 10, 12) sont à une certaine distance (a) par rapport aux extrémités des côtés de cadre afférents (6a, 6b) et que ces emplacements de raccordement se trouvent au voisinage des emplacements de raccordement des transformateurs médians (8, 11).

5. Machine à souder selon l'une des revendications précédentes, caractérisée en ce que les transformateurs (7, 8, 9 et 10, 11, 12) sont disposés en deux rangées horizontales en dessous et au-dessus du passage des pièces d'oeuvre (1).

6. Machine à souder selon l'une des revendications 3 à 5, caractérisée en ce qu'elle comprend des barres collectrices (21, 22) qui sont dirigées parallèlement aux côtés du cadre (6a et 6b), le long desquels les transformateurs (7, 8, 9 et 10, 11, 12) sont disposés, chaque barre collectrice (21, 22) comportant des barres de raccordement (21b, 21c) partant à angle droit dont chacune s'insère entre un transformateur extérieur (7, 9 et 10, 12) et le transformateur médian voisin (8 et 11), les transformateurs extérieurs (7, 9 et 10, 12) étant reliés par une extrémité (15a) de leur enroulement secondaire (15) en forme de bande sur toute la largeur de la bande à la barre de raccordement afférente (21b, 21c) tandis que l'enroulement secondaire (15) en forme de bande de chaque transformateur médian (8 et 11) est relié par une extrémité (15b) sur toute la largeur de la bande, dans la région entre les barres de raccordement (21b, 21c), à la partie de base (21a et 22a) de la barre collectrice afférente (21 et 22).

7. Machine à souder selon l'une des revendications précédentes, caractérisée en ce que l'intervalle de passage (1) des pièces à traiter entoure une voie de transport des pièces (32), par exemple un transporteur à rouleaux avec des rouleaux mobiles pas à pas (35a, 35b), entre lesquels la pièce à traiter (W) par exemple un corps chauffant plat, peut être fixée par ses bords et déplacé pas à pas.

8. Machine à souder selon l'une des revendications 6 et 7, caractérisée en ce qu'elle comprend plusieurs électrodes principales (4) qui sont disposées suivant une rangée, chaque électrode principale (4) étant reliée par l'intermédiaire d'un conducteur souple (23) à la barre collectrice afférente (21) et comportant un dispositif d'entrainement propre (25, 26, 27).

9. Machine à souder selon la revendication 8, caractérisée en ce que la rangée d'électrodes principales (4) est située en regard d'une contre-électrode unique (5) constituée sous forme de barre électrode, la contre-électrode (5) se trouvant de préférence sous les électrodes principales (4).

10. Machine à souder selon la revendication 9, caractérisée en ce que la barre électrode (5) est déplaçable suivant sa longueur.

11. Machine à souder selon l'une des revendications 9 et 10, caractérisée en ce que les électrodes principales (4) sont décalées latéralement par rapport à la ligne médiane de la surface de contact de la barre électrode (5) et en ce que la barre électrode (5) peut tourner de 180° autour d'un axe dirigé perpendiculairement à sa surface de contact.

12. Machine à souder selon l'une des revendications 9 à 11, caractérisée en ce que la barre électrode (5) présente plusieurs surfaces de contact, et de préférence quatre surfaces de contact pour une barre électrode à section transversale carrée, et peut tourner autour de son axe longitudinal.

13. Machine à souder selon l'une des revendications 9 à 12, caractérisée en ce que la barre électrode (5) est fixée par une plaque de serrage (30) qui peut être poussée contre la barre électrode (5) par des vérins de serrage (31) sollicités pneumatiquement ou hydrauliquement.

14. Machine à souder selon l'une des revendications précédentes, caractérisée en ce que l'intervalle de passage des pièces à traiter présente une largeur libre d'au moins 500 mm, en ce que plusieurs électrodes principales (4) sont disposées suivant une rangée d'au moins 300 mm de longueur et en ce que l'énergie par impulsion de soudage est supérieur à 25.000 Wsec.

15. Machine à souder selon l'une des revendications précédentes, caractérisée en ce que des vérins pneumatiques (25, 26, 27) sont prévus comme dispositif d'entrainement pour les électrodes mobiles (4).

16. Machine à souder selon la revendication 15, caractérisée en ce que plusieurs vérins pneumatiques (25, 26, 27) sont affectés à chaque électrode obile (4), ces vérins se trouvant dans des rangées dirigées perpendiculairement à la rangée des électrodes (4).

17. Machine à souder selon l'une des revendications précédentes, caractérisée en ce que les parties de cadre (6'c, 6'd) qui s'étendent entre les régions de cadre (6a, 6b), auxquelles les transformateurs cités (7, 8, 9 et 10, 11, 12) sont raccordés, sont formées par des enroulements secondaires (42, 43) d'autres transformateurs (40, 41).

18. Machine à souder selon la revendication 17, caractérisée en ce que les autres transformateurs (40, 41) sont disposés dans un circuit en série avec le reste des transformateurs (7, 8, 9 et 10, 11, 12).

19. Machine à souder selon l'une des revendications 17 et 18, caractérisée en ce que en regard l'un de l'autre des autres transformateurs (40 et 41) sont disposés dont les enroulements secondaires (42, 43) constituent des parties constitutives de côtés courts du cadre (6'c, 6'd), tandis que les transformateurs restants (7, 8, 9 et 10, 11, 12) sont disposés sur les côtés longs du cadre (6a, 6b).

_Fig.1_

0 179 165

*Fig.2*

_Fig.3_

_Fig.4_

_Fig.5_

_Fig.6_